# FASCICULE DE BREVET EUROPEEN

(11) **EP 0 550 316 B1**
(45) Date de publication et mention de la délivrance du brevet: **28.05.1997**
(21) Numéro de dépôt: 92403487.9
(22) Date de dépôt: 21.12.1992
(51) Int. Cl.: H04B 3/14, H04N 7/10

(54) **Système correcteur de lignes de transmission**
Entzerrer für eine Übertragungsleitung
Transmission line equaliser

(30) Priorité: 31.12.1991 FR 9116375
(43) Date de publication de la demande: 07.07.1993
(73) Titulaire: THOMSON BROADCAST, 95800 Cergy-Saint-Christophe (FR)
(72) Inventeur: Halin, Pierre, F-92402 Courbevoie Cedex (FR)
(74) Mandataire: Ruellan-Lemonnier, Brigitte

(56) Documents cités:
- US-A- 2 794 866
- US-A- 3 573 667
- US-A- 4 151 490
- PATENT ABSTRACTS OF JAPAN vol. 4, no. 87 (E-16)(569) 21 Juin 1980 & JP-A-55 052 645
- PATENT ABSTRACTS OF JAPAN vol. 10, no. 337 (E-454)(2393) 14 Novembre 1986 & JP-A-61 140 233

## Description

La présente invention concerne un dispositif correcteur de lignes de transmission.

Les lignes de transmission sont utilisées de façon générale dans le domaine des télécommunications. Elles permettent de véhiculer un signal électrique d'un point à un autre. Il peut s'agir, par exemple, de transmettre le signal vidéo issu d'une tête de caméra vers un car de reportages ou bien encore entre deux corps de bâtiment.

Tout signal qui se propage dans une ligne de transmission subit des déformations. Ainsi, toute ligne de transmission provoque-t-elle une atténuation du signal qu'elle véhicule et cette atténuation est d'autant plus forte que la ligne est de grande longueur. Pour des lignes de même type et de même longueur, par exemple des câbles coaxiaux constitués des mêmes éléments, l'atténuation varie tout de même d'une ligne à l'autre. Ceci est dû au fait que les éléments constituant ces lignes ne sont ni rigoureusement identiques, ni associés de façon rigoureusement identique.

Cette différence d'atténuation d'une ligne à l'autre existe aussi bien pour un signal continu, dont la fréquence est nulle, que pour un signal de fréquence f quelconque. D'autre part, quand la fréquence f d'un signal transporté sur une ligne s'accroît, l'atténuation du signal s'accroît aussi.

Il est connu de l'homme de l'art qu'un signal quelconque comprend une composante continue et des composantes à différentes fréquences. Il est donc nécessaire, pour un tel signal, de corriger à la fois l'atténuation de la composante continue et l'atténuation des composantes aux différentes fréquences.

Afin de réaliser ces corrections, différents systèmes sont connus de l'homme de l'art. Dans la suite de la description, la correction d'amplitude effectuée sur un signal continu ou sur la composante continue d'un signal quelconque, sera nommée correction en amplitude. De même, la correction d'amplitude effectuée sur un signal de fréquence f ou sur les composantes à différentes fréquences d'un signal quelconque sera nommée correction en fréquence.

Certains des systèmes de correction sont basés sur la commutation de cellules de correction. De tels systèmes corrigent les défauts de propagation en amplitude et en fréquence. Les cellules de correction sont composées d'éléments discrets tels que résistances, self-inductances ou capacités. Ces systèmes de correction doivent être placés en des endroits précis de la ligne de transmission car ils sont calculés de façon à corriger les défauts de la ligne sur une longueur donnée. Le réglage des éléments discrets constituant les cellules est manuel. Ceci est un inconvénient car cela rend les réglages longs et fastidieux. Il est alors pratiquement impossible de régler rapidement et à faible coût un système composé de plusieurs lignes de transmission en parallèle.

D'autres systèmes effectuent une correction automatique en utilisant le principe d'un asservissement dont la référence est prélevée sur le signal lui-même. La correction automatique est seulement une correction en amplitude. Pour réaliser une correction en fréquence, il est nécessaire d'introduire un filtre dans le dispositif correcteur. Ce filtre, constitué lui aussi d'éléments discrets présente l'inconvénient d'être réglé manuellement pour une ligne de transmission donnée. Son réglage est donc différent d'une ligne à l'autre, même si ces lignes sont du même type.

L'invention ne présente pas ces inconvénients.

La présente invention a pour objet un système correcteur de ligne de transmission comprenant des premiers moyens constitués d'une première boucle d'asservissement destinée à corriger automatiquement l'atténuation de la composante continue d'un signal se propageant sur une ligne et des seconds moyens destinés à corriger l'atténuation des différentes composantes fréquentielles du signal, lesdits seconds moyens comprenant un filtre dont la courbe de réponse est réglée de façon à corriger en fréquence la courbe d'atténuation de la ligne. Les seconds moyens comprennent aussi une seconde boucle d'asservissement permettant d'ajuster à une valeur désirée l'amplitude d'au moins une composante fréquentielle du signal.

La présente invention a aussi pour objet un système correcteur de N lignes de transmission comprenant des moyens pour corriger la dispersion d'atténuation des composantes continues et des composantes fréquentielles des signaux se propageant sur les N lignes. Les moyens pour corriger la dispersion d'atténuation des composantes continues et fréquentielles comprennent des premiers moyens permettant de fournir, pour les N lignes, au moins une même consigne de gain et au moins une même consigne de fréquence et N seconds moyens permettant de modifier l'amplitude des signaux transmis sur les N lignes sous l'action desdites consignes.

Un avantage de l'invention est donc de corriger de façon automatique en amplitude et en fréquence les variations d'atténuation que les lignes induisent sur le signal.

D'autres caractéristiques et avantages de l'invention apparaîtront à la lecture d'un mode de réalisation préférentiel fait avec référence aux figures ci-annexées dans lesquelles :
- la figure 1 représente, en fonction de la fréquence f du signal transmis, les courbes d'atténuation A de trois lignes de transmission de même type et de même longueur, dans le cas où aucune correction n'est effectuée ;
- la figure 2A représente le schéma synoptique d'un système correcteur de lignes automatique suivant l'art antérieur;
- la figure 2B représente, en fonction de la fréquence f du signal transmis, les courbes d'atténuation A de trois lignes de transmission de même type et de même longueur, dans le cas où les lignes sont corrigées par le système correcteur de lignes décrit en figure 2A ;
- la figure 3A représente le schéma synoptique d'un système correcteur de ligne selon le mode de réalisation préférentiel de l'invention ;
- la figure 3B représente, en fonction de la fréquence f du signal transmis, les courbes d'atténuation A de trois lignes de transmission de même type et de même longueur, dans le cas où les lignes sont corrigées par le système selon l'invention décrit en figure 3A;
- la figure 3C représente, en fonction de la fréquence f du signal transmis, les courbes d'atténuation A de trois lignes de transmission de même type et de même longueur selon un autre mode de réalisation de l'invention ;
- la figure 4 représente une application du système correcteur selon l'invention.

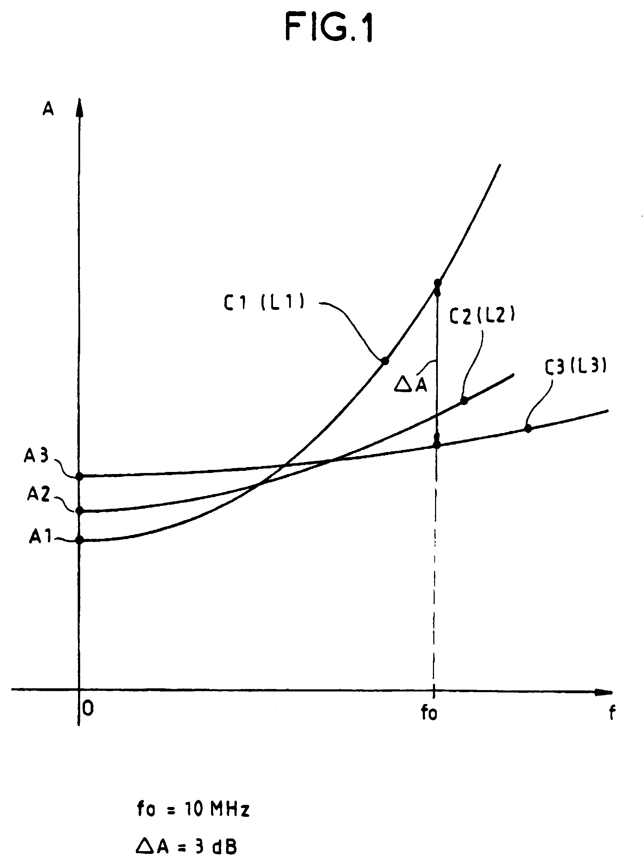

La figure 1 représente, en fonction de la fréquence f du signal transmis, les courbes d'atténuation A de trois lignes de transmission de même type et de même longueur, dans le cas où aucune correction n'est effectuée.

La courbe C1 (L1) est relative à une ligne L1, la courbe C2 (L2) à une ligne L2 et la courbe C3 (L3) à une ligne L3.

Comme cela a été mentionné précédemment, l'atténuation A est différente d'une ligne à l'autre. Pour un signal continu, c'est-à-dire à fréquence nulle, les lignes L1, L2 et L3 induisent les atténuations respectives A1, A2 et A3. De même, quand la fréquence croît, l'atténuation évolue différemment d'une ligne à l'autre. On peut ainsi obtenir, par exemple, une atténuation différentielle ΔA de l'ordre de 3 décibels entre deux lignes de transmission de même type (L1 et L3), ayant chacune une longueur de 100 mètres et véhiculant un signal identique de fréquence fₒ = 10 MHz.

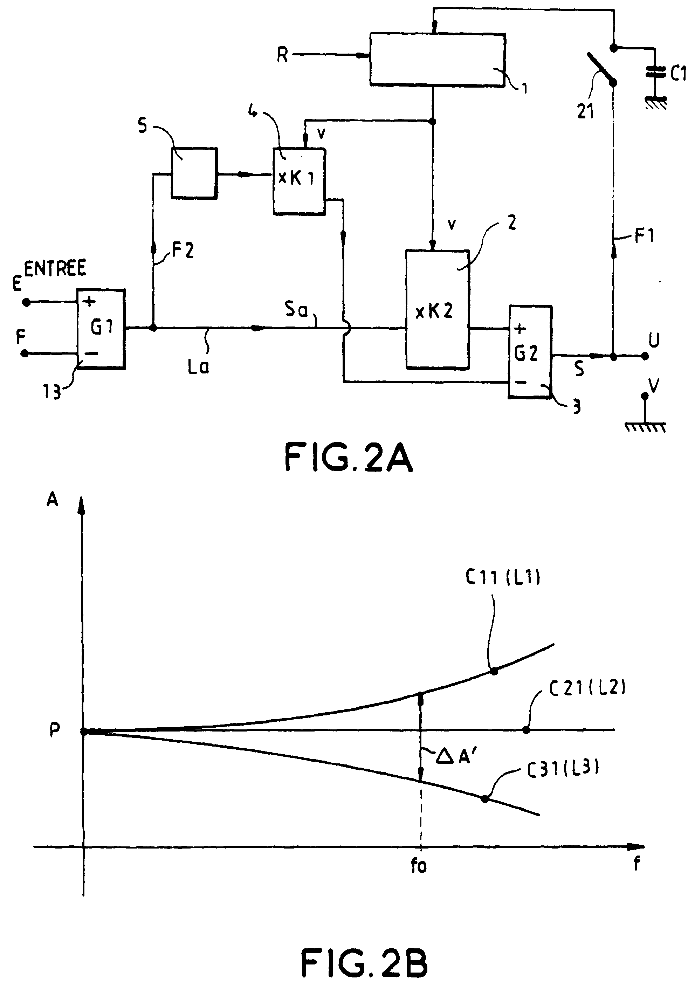

La figure 2A représente le schéma synoptique d'un système correcteur de lignes automatique suivant l'art antérieur.

L'entrée du système correcteur est située entre les points E et F et la sortie entre les points U et V.

Une fraction F1 du signal S est prélevée en sortie du système correcteur. Le signal F1 est prélevé, par exemple, par l'intermédiaire de l'interrupteur 21. Quand l'interrupteur 21 est fermé, la tension détectée, par exemple aux bornes de la capacité C1, mesure le niveau de la composante continue du signal. La tension détectée est alors envoyée dans un comparateur 1 qui compare celle-ci à une grandeur de référence R, de façon à créer une consigne de gain v.

La consigne v vient alors commander un multiplicateur 2 dont le facteur multiplicatif K2, appliqué au signal Sa parcourant l'élément de ligne La, permet d'ajuster au bon niveau l'amplitude du signal de sortie S, par l'intermédiaire de l'amplificateur différentiel 3. A cette fin, le signal issu du multiplicateur 2 est envoyé sur la borne positive de l'amplificateur différentiel 3 de gain linéaire G2. Afin de réaliser la correction en fréquence, une fraction F2 du signal Sa est prélevée sur l'élément de ligne La. Cette fraction de signal F2 est envoyée dans un filtre passe-haut 5, réglé de façon à corriger en fréquence la courbe d'atténuation de la ligne selon la loi désirée. Cette loi peut être telle, par exemple, que la pente de la courbe d'atténuation du signal S en fonction de la fréquence soit nulle.

La consigne de gain v est appliquée à un multiplicateur 4 de facteur multiplicatif K1. Le signal issu du multiplicateur 4 est alors envoyé sur la borne moins de l'amplificateur différentiel 3, permettant ainsi d'ajuster correctement la réponse en fréquence de la ligne de transmission.

Les filtres 5 de correction de fréquence sont constitués de self-inductances et de capacités. Pour certaines applications, la fréquence de coupure haute de la ligne de transmission peut atteindre des valeurs élevées, par exemple 500 MHz.

Il est connu de l'homme de l'art qu'un nombre important de self-inductances et de capacités est alors nécessaire pour couvrir une réponse en fréquence ayant une aussi large bande. Le réglage des self-inductances et des capacités étant manuel, la correction en fréquence de la ligne est, dans ces conditions, une opération longue et fastidieuse.

D'autre part, la stabilité en température et la stabilité dans le temps de ces filtres s'avèrent médiocres puisqu'ils sont réalisés à l'aide d'éléments discrets.

La figure 2B représente, en fonction de la fréquence f du signal transmis, les courbes de l'atténuation A de trois lignes de transmission de même type et de même longueur, dans le cas où le système correcteur de ligne est le système décrit en figure 2A.

A fréquence nulle, toutes les courbes (C11 (L1), C21 (L2), C31 (L3) ) passent par le même point P.

Cela est dû au fait que la correction en amplitude est effectué à l'aide d'une boucle d'asservissement prenant une référence d'amplitude sur le signal lui-même, comme cela a été décrit ci-dessus.

La courbe C21 (L2) représente l'atténuation d'une ligne L2. Sur cette ligne, le filtre 5 permettant la correction de fréquence a été réglé, de façon que la pente de l'atténuation en fonction de la fréquence soit nulle. Le réglage est manuel et s'avère donc délicat.

Les courbes C11 (L1) et C31 (L3) représentent les atténuations respectives de deux lignes de transmission L1 et L3, du même type et de même longueur que la ligne L2, dans le cas où le filtre 5 permettant la correction de fréquence est celui qui a été réglé pour corriger la ligne L2.

On constate une dispersion en fréquence. A la fréquence fₒ = 10 MHz, on retrouve une atténuation différentielle de l'ordre de 3 décibels entre les lignes L1 et L3. Afin d'obtenir des courbes C11 (L1) et C31 (L3) de pente nulle en fonction de la fréquence, il serait nécessaire de régler spécifiquement le filtre 5 de correction de fréquence de chaque ligne.

Ainsi est-il nécessaire de corriger séparément chaque ligne de transmission quand on désire réaliser un dispositif mettant en parallèle plusieurs lignes. Comme cela a été mentionné plus haut, les réglages sont manuels, ce qui conduit à une manipulation longue et rapidement très coûteuse.

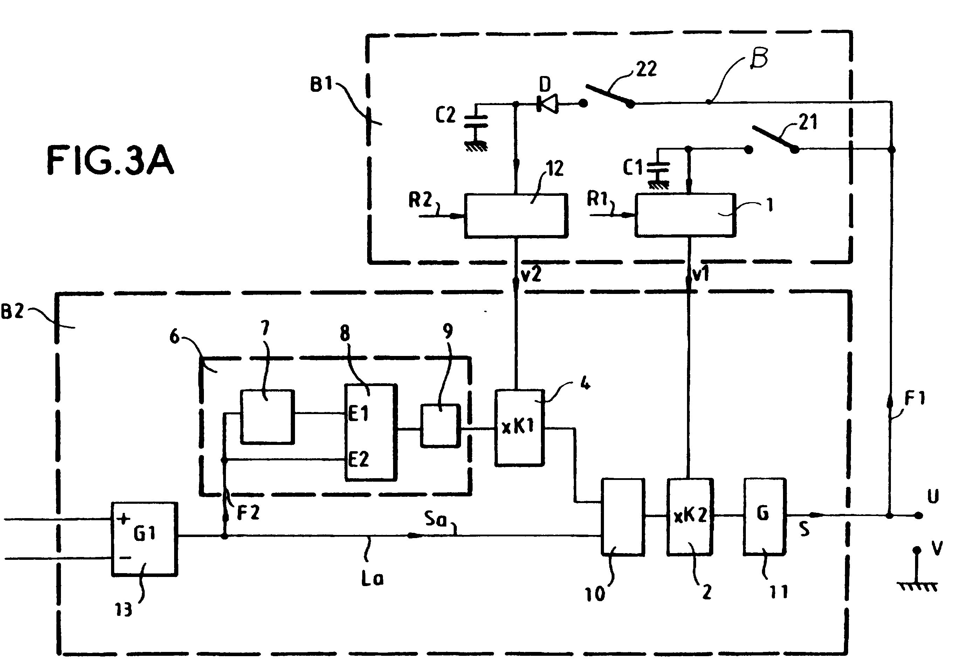

La figure 3A représente le schéma synoptique d'un système correcteur de ligne selon le mode de réalisation préférentiel de l'invention.

L'entrée du dispositif est située entre les points E et F et la sortie entre les points U et V. De la même manière que pour le système décrit en figure 2A, on retrouve une boucle de correction en amplitude avec, comme référence R1, un palier de niveau calibré. Ce palier peut être, par exemple, le fond du signal de synchronisation vidéo permettant de corriger, aux basses fréquences, l'atténuation du signal due à la résistance ohmique de la ligne de transmission. A l'aide du comparateur 1, une fraction de signal F1, prélevée en sortie du système correcteur lors de la fermeture de l'interrupteur 21, est comparée à la référence R1 de façon à créer une consigne de gain v1.

A la fréquence désirée, ou fréquence de référence, la correction en fréquence est réalisée, selon l'invention, à l'aide de la boucle B d'asservissement.

Une fraction F1 de signal S est prélevée, par exemple, par l'intermédiaire de l'interrupteur 22. Quand l'interrupteur 22 est fermé, la diode D réalise la détection crête du signal à la fréquence désirée. La tension recueillie aux bornes de la capacité C2 est alors envoyée dans un comparateur 12 de façon à créer une consigne de fréquence v2, par comparaison de ladite tension recueillie et de la référence de fréquence R2. La consigne v2 vient alors commander un multiplicateur 4 dont le facteur multiplicatif K1, appliqué au signal issu du dispositif 6, permet d'ajuster au bon niveau l'amplitude du signal à la fréquence de référence.

Il est connu de l'homme de l'art que tout moyen de détection autre que la diode D et la capacité C2, de même que tout moyen de comparaison autre que le comparateur 12 peuvent être utilisés.

Selon le mode de réalisation préférentiel de l'invention, on réalise une correction automatique en fréquence à une fréquence de référence donnée.

Cependant, selon l'invention, on peut aussi effectuer des corrections automatiques en fréquence à plusieurs fréquences de référence.

Il y a alors autant de boucles d'asservissement en amplitude que de fréquences de référence. Le signal permettant de créer une fréquence de référence peut être soit contenu dans l'information utile que représente le signal transporté, soit n'avoir été créé qu'à seule fin d'être un signal de référence. Selon le mode de réalisation préférentiel de l'invention la fréquence de référence est, dans le cas d'un signal vidéo, la fréquence du signal de référence sous-porteuse couleur vidéo, communément appelée "burst".

Le dispositif de filtrage 6 permet d'effectuer, selon la loi désirée, une correction en fréquence sur les composantes fréquentielles autres que la composante à la fréquence de référence.

La courbe de réponse du filtre 6 est choisie de façon à corriger, en fonction de la fréquence, la courbe d'atténuation de la ligne selon la loi désirée. Le filtre 6 peut donc être, par exemple, un filtre passe-haut calculé de façon que la pente de la courbe d'atténuation du signal S en fonction de la fréquence soit nulle.

Le filtre 6 est constitué d'une ligne à retard 7, d'un sommateur 8 et d'un circuit déphaseur 9. Afin d'ajuster le signal à la loi de fréquence désirée, une fraction F2 du signal Sa est prélevée sur l'élément de ligne La. Cette fraction de signal F2 est envoyée d'une part dans la ligne à retard 7 et d'autre part sur l'entrée E2 du sommateur 8, dont l'entrée E1 est alimentée par le signal issu de la ligne à retard 7. Le signal issu du sommateur 8 est envoyé dans un circuit déphaseur 9 qui effectue une correction de phase permettant, par exemple, de mettre en phase les signaux arrivant sur le sommateur 10.

Selon le mode de réalisation préférentiel de l'invention, le circuit déphaseur 9 est placé en sortie du sommateur 8. Il pourrait tout aussi bien être placé en sortie du multiplicateur 4.

La consigne de fréquence v2 vient alors commander un multiplicateur 4 dont le facteur multiplicatif K1 permet d'amplifier le signal issu du dispositif 6 de correction de fréquence.

Le signal sortant du multiplicateur 4 est envoyé dans un sommateur 10 qui reçoit, d'autre part, le signal sortant directement de l'amplificateur différentiel 13 de gain G1 situé à l'entrée du dispositif. La consigne v1 vient alors commander un multiplicateur 2 dont le facteur multiplicatif K2, appliqué au signal issu du sommateur 10, permet d'ajuster l'amplitude du signal de sortie S. Le signal issu du multiplicateur 2 est envoyé dans un amplificateur 11 de gain G.

Un avantage de l'invention est l'utilisation d'un filtre 6 du type filtre à ligne à retard, communément appelé "filtre en peigne". Ce type de filtre offre l'avantage de ne nécessiter aucun réglage car sa réponse est définie par la valeur de la ligne à retard. Sa stabilité dans le temps est grande puisqu'il n'est pas réalisé à partir de composants discrets. Cette dernière caractéristique garantit aussi l'excellente reproductibilité du filtre 6.

L'utilisation d'un tel filtre contribue avantageusement à réduire le coût de mise en oeuvre du système correcteur de lignes selon l'invention.

Sur la figure 3A les comparateurs 1 et 12, les interrupteurs 21 et 22, et les éléments de détection C1, D, C2 sont regroupés dans un même bloc de consigne B1. De même, les amplificateurs 13 et 11, les sommateurs 8 et 10, les multiplicateurs 4 et 2, et le filtre 6, sont regroupés dans un même bloc correcteur B2.

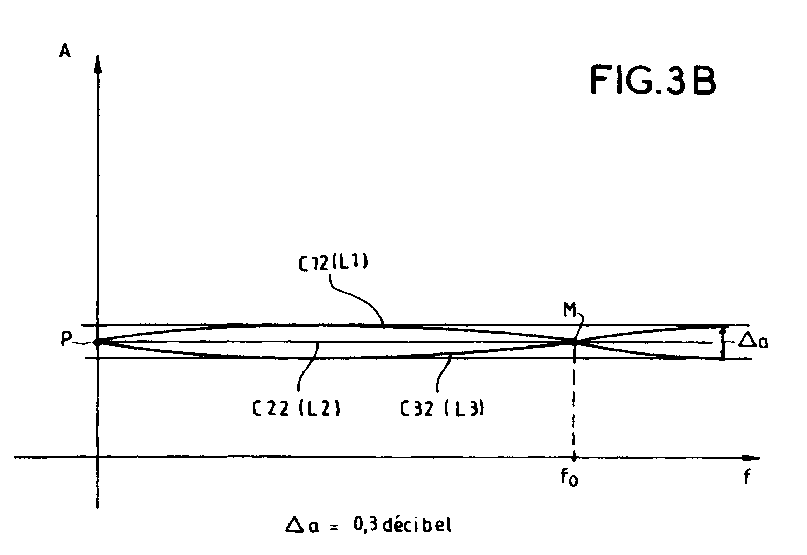

La figure 3B représente, en fonction de la fréquence f du signal transmis, les courbes d'atténuation A de trois lignes de transmission de même type et de même longueur, dans le cas où les lignes sont corrigées par le système selon l'invention décrit en figure 3A.

A fréquence nulle, la boucle de correction en amplitude assure l'intersection des trois courbes au même point P. A la fréquence de référence f0, la boucle de correction en fréquence assure, selon l'invention, l'intersection des courbes au point M.

La courbe C22 (L2) représente la réponse de l'amplitude en fonction de la fréquence de la ligne L2 quand le filtre 7 a été calculé pour annuler exactement la pente de l'atténuation qui existait avant correction.

Les courbes C12 (L1) et C32 (L3) représentent respectivement la réponse de la ligne L1 et la réponse de la ligne L3 quand le même dispositif correcteur que celui calculé pour la ligne L2 est utilisé. Pour une bande passante identique à la bande passante du système décrit précédemment (figure 2A), la dispersion en amplitude entre lignes est alors contenue dans une fourchette Δa = 0,3 décibel. Cette valeur de Δ a est à comparer avec la valeur ΔA' = 3 décibels exprimée précédemment.

On voit l'avantage qu'il y a à utiliser un dispositif selon l'invention pour maintenir la dispersion d'amplitude en fréquence dans des limites acceptables.

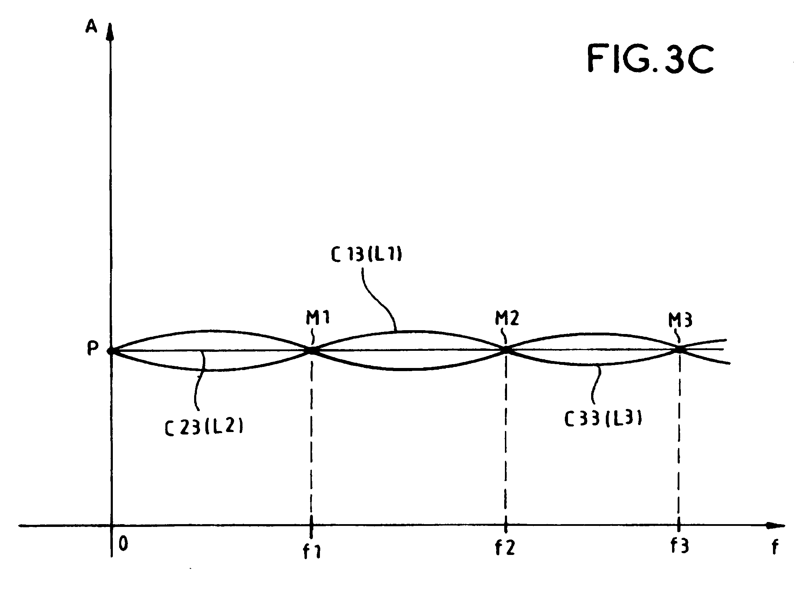

La figure 3C représente, en fonction de la fréquence f du signal transmis, les courbes d'atténuation A de trois lignes de transmission de même type et de même longueur selon un autre mode de réalisation de l'invention.

Comme cela a été mentionné plus haut, on peut multiplier les points de référence en fréquence afin d'améliorer la réponse du dispositif.

La figure 3C représente les réponses en amplitude des trois lignes de transmission L1, L2 et L3 dans le cas où, par exemple, trois fréquences de référence sont considérées.

Les courbes se recoupent alors en trois points : M1 à la fréquence f1, M2 à la fréquence f2 et M3 à la fréquence f3.

Le système correcteur selon l'invention permet, d'une part, de réduire de façon importante la dispersion entre différentes lignes et, d'autre part, de simplifier les réglages à l'aide de l'utilisation de filtres analogiques à ligne à retard. Il devient donc possible de réaliser des systèmes correcteurs de plusieurs lignes de transmission en parallèle. Il peut s'agir, par exemple, de corriger les différentes lignes de transmission d'un même câble multi-conducteurs.

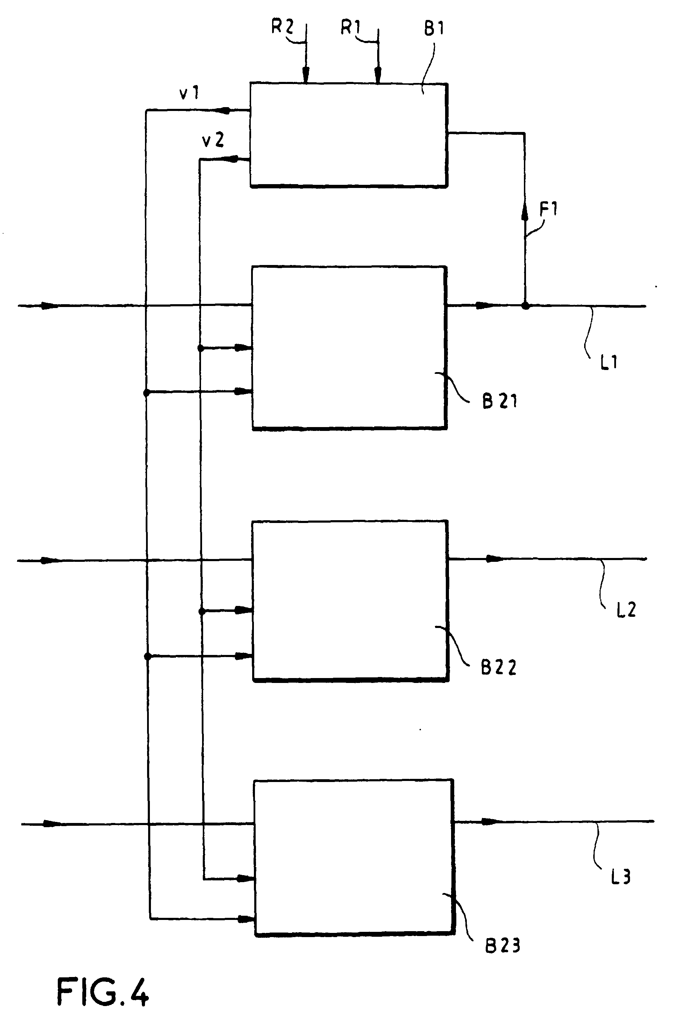

La figure 4 représente une application du système correcteur selon l'invention dans le cas où, par exemple, trois lignes de transmission sont mises en parallèle.

Le bloc de consigne B1 est commun aux trois lignes. Il reçoit les références respectives d'amplitude et de fréquence R1 et R2. Il contient les éléments de détection de signal (C1, D, C2) et les éléments de comparaison (1, 12).

Chaque ligne de transmission est équipée de son bloc correcteur : le bloc B21 pour la ligne L1, B22 pour la ligne L2 et B23 pour la ligne L3. Chaque bloc correcteur contient les éléments de corrections de fréquence (7, 8, 9, 4, 10) ainsi que les dispositifs permettant d'amplifier le signal (13, 2, 11).

Les dispositifs utilisant plusieurs lignes de transmission en parallèle sont souvent nécessaires. Cela se produit, en particulier, quand on désire avoir entre deux points A et B plusieurs liaisons allant aussi bien de A vers B que de B vers A.

La facilité de mise en oeuvre de tels systèmes est un avantage de l'invention.

## Revendications

1. Système correcteur de ligne de transmission comprenant des premiers moyens (21, C1, 1, 2) constitués d'une première boucle d'asservissement destinée à corriger automatiquement l'atténuation de la composante continue d'un signal se propageant sur une ligne et des seconds moyens destinés à corriger l'atténuation des différentes composantes fréquentielles du signal, lesdits seconds moyens comprenant un filtre (5, 6) dont la courbe de réponse est réglée de façon à corriger en fréquence la courbe d'atténuation de la ligne, caractérisé en ce que les seconds moyens comprennent aussi une seconde boucle (B) d'asservissement permettant d'ajuster à une valeur désirée l'amplitude d'au moins une composante fréquentielle du signal.

2. Système correcteur selon la revendication 1, caractérisé en ce que ladite second boucle (B) d'asservissement comprend un premier moyen (22) permettant de récupérer une fraction (F1) du signal, un deuxième moyen (D, C2) permettant de détecter l'amplitude de la fraction (F1) du signal, un troisième moyen (12) permettant de comparer ladite amplitude détectée à une valeur de référence (R2) afin de créer une consigne (v2) de fréquence, un quatrième moyen (4) pour ajuster l'amplitude du signal de ladite composante fréquentielle sous l'action de la consigne (v2) de fréquence, et un cinquième moyen (10) pour réintroduire dans la ligne le signal issu du quatrième moyen (4).

3. Système correcteur selon la revendication 2, caractérisé en ce que le premier moyen (22) est un interrupteur, le deuxième moyen (D, C2) est une diode (D) reliée à une capacité (C2), le troisième moyen (12) est un comparateur, le quatrième moyen (4) est un multiplicateur et le cinquième moyen (10) est un additionneur permettant d'additionner le signal issu du multiplicateur et le signal véhiculé sur la ligne.

4. Système correcteur selon l'une quelconque des revendications précédentes, caractérisé en ce que le filtre (6) comprend au moins une ligne à retard (7).

5. Système correcteur selon la revendication 4, caractérisé en ce que le filtre comprend au moins un circuit déphaseur (9).

6. Système correcteur selon l'une quelconque des revendications précédentes, caractérisé en ce que la première boucle d'asservissement comprend un interrupteur (21) permettant de récupérer une fonction (F1) du signal, une capacité permettant de détecter l'amplitude de la fraction du signal, un comparateur (1) permettant de comparer l'amplitude détectée à une valeur de référence (R1) afin de créer une consigne (v1) de gain et un dispositif (2) pour ajuster l'amplitude de la composante continue sous l'action de la consigne (v1) de gain.

7. Système correcteur de N lignes de transmission comprenant des moyens pour corriger la dispersion d'atténuation des composantes continues et des composantes fréquentielles des différents signaux se propageant sur N lignes, caractérisé en ce que lesdits moyens comprennent des premiers moyens (B1) permettant de fournir, pour les N lignes, au moins une même consigne (v1) de gain et au moins une même consigne (v2) de fréquence et N seconds moyens (B21, B22, B23) permettant de modifier l'amplitude des signaux transmis sur les N lignes sous l'action desdites consignes.

8. Système correcteur selon la revendication 7, caractérisé en ce que lesdits premiers moyens (B1) comprennent, d'une part, un moyen (21) permettant de récupérer une fraction (F1) de la composante continue du signal se propageant sur l'une des N lignes, un moyen (C1) permettant de détecter l'amplitude de cette composante et un moyen (1) permettant de comparer l'amplitude ainsi détectée à une référence d'amplitude (R1) afin de créer la consigne (v1) de gain et, d'autre part, un moyen (22) permettant de récupérer une fraction (F1) d'au moins une composante fréquentielle, un moyen (D, C2) permettant de détecter l'amplitude de ladite composante fréquentielle, et un moyen (12) permettant de comparer l'amplitude détectée à une valeur (R2) de référence de façon à créer la consigne (v2) de fréquence.

9. Système correcteur selon la revendication 8, caractérisé en ce que chacun des N seconds moyens (B21, B22, B23) comprend des moyens (2) permettant d'ajuster l'amplitude de la composante continue du signal à une valeur désirée sous l'action de la consigne (v1) de gain et des moyens (4) permettant d'ajuster l'amplitude de la composante fréquentielle sous l'action de la consigne (v2) de fréquence.

10. Système correcteur selon l'une quelconque des revendications 7 à 9, caractérisé en ce que chacun des N seconds moyens (B21, B22, B23) comprend au moins un filtre (6) à ligne à retard.

## Patentansprüche

1. Übertragungsleitungsentzerrersystem mit ersten Mitteln (21, C1, 1, 2), die aus einer ersten Regelschleife zur automatischen Entzerrung der Dämpfung der Gleichkomponente eines sich auf einer Leitung fortpflanzenden Signals und zweiten Mitteln zur Dämpfungsentzerrung der verschiedenen Frequenzkomponenten des Signals bestehen, wobei die besagten zweiten Mittel ein Filter (5, 6) umfassen, dessen Kennlinie zur Frequenzentzerrung der Dämpfungskurve der Leitung eingestellt wird, dadurch gekennzeichnet, daß die zweiten Mittel auch eine zweite Regelschleife (B) umfassen, die die Einstellung der Amplitude von mindestens einer Frequenzkomponente des Signals auf einen Sollwert erlaubt.

2. Entzerrersystem nach Anspruch 1, dadurch gekennzeichnet, daß die besagte zweite Regelschleife (B) ein erstes Mittel (22) zum Abzapfen eines Bruchteils (F1) des Signals, ein zweites Mittel (D, C2) zum Erkennen der Amplitude des Bruchteils (F1) des Signals, ein drittes Mittel (12) zum Vergleichen der besagten erkannten Amplitude mit einem Bezugswert (R2) zum Erzeugen eines Frequenzführungswerts (v2), ein viertes Mittel (4) zum Einstellen der Amplitude des Signals der besagten Frequenzkomponente unter dem Einfluß des Frequenzführungswerts (v2) und ein fünftes Mittel (10) zum Wiedereinführen des vom vierten Mittel (4) abgegebenen Signals in die Leitung umfaßt.

3. Entzerrersystem nach Anspruch 2, dadurch gekennzeichnet, daß das erste Mittel (22) ein Schalter ist, das zweite Mittel (D, C2) eine mit einer Kapazität (C2) verbundene Diode (D) ist, das dritte Mittel (12) ein Vergleicher ist, das vierte Mittel (4) ein Multiplikator ist und das fünfte Mittel (10) ein Addierer ist, der die Addition des vom Multiplikator abgegebenen Signals und des auf der Leitung transportierten Signals erlaubt.

4. Entzerrersystem nach einem der vorhergehenden Ansprüche, dadurch gekennzeichnet, daß das Filter (6) mindestens eine Verzögerungsleitung (7) umfaßt.

5. Entzerrersystem nach Anspruch 4, dadurch gekennzeichnet, daß das Filter mindestens eine Phasenverschieberschaltung (9) umfaßt.

6. Entzerrersystem nach einem der vorhergehenden Ansprüche, dadurch gekennzeichnet, daß die erste Regelschleife einen Schalter (21) zum Abzapfen einer Funktion (F1) des Signals, eine Kapazität zum Erkennen der Amplitude des Bruchteils des Signals, einen Vergleicher (1) zum Vergleichen der erkannten Amplitude mit einem Bezugswert (R1) zum Erzeugen eines Verstärkungsführungswertes (v1) und eine Vorrichtung (2) zum Einstellen der Amplitude der Gleichkomponente unter dem Einfluß des Verstärkungsführungswertes (v1) umfaßt.

7. Entzerrersystem für N Übertragungsleitungen mit Mitteln zum Korrigieren der Dämpfungsstreuung der Gleichkomponenten und der Frequenzkomponenten von verschiedenen, sich auf N Leitungen fortpflanzenden Signalen, dadurch gekennzeichnet, daß die besagten Mittel erste Mittel (B1) zum Zuführen von mindestens einem gleichen Verstärkungsführungswert (v1) und mindestens einem gleichen Frequenzführungswert (v2) für die N Leitungen und N zweite Mittel (B21, B22, B23) zum Verändern der Amplitude der auf den N Leitungen übertragenen Signale unter dem Einfluß der besagten Führungswerte umfassen.

8. Entzerrersystem nach Anspruch 7, dadurch gekennzeichnet, daß die besagten ersten Mittel (B1) einerseits ein Mittel (21) zum Abzapfen eines Bruchteils (F1) der Gleichkomponente des sich auf einer der N Leitungen fortpflanzenden Signals, ein Mittel (C1) zum Erkennen der Amplitude dieser Komponente und ein Mittel (1) zum Vergleichen der so erkannten Amplitude mit einem Amplitudenbezugswert (R1) zum Erzeugen des Verstärkungsführungswertes (v1) und andererseits ein Mittel (22) zum Abzapfen eines Bruchteils (F1) von mindestens einer Frequenzkomponente, ein Mittel (D, C2) zum Erkennen der Amplitude der besagten Frequenzkomponente und ein Mittel (12) zum Vergleichen der erkannten Amplitude mit einem Bezugswert (R2) zum Erzeugen des Frequenzführungswertes (v2) umfassen.

9. Entzerrersystem nach Anspruch 8, dadurch gekennzeichnet, daß jedes der N zweiten Mittel (B21, B22, B23) Mittel (2) zum Einstellen der Amplitude der Gleichkomponente des Signals auf einen Sollwert unter dem Einfluß des Verstärkungsführungswertes (v1) und Mittel (4) zum Einstellen der Amplitude der Frequenzkomponente unter den Einfluß des Frequenzführungswertes (v2) umfaßt.

10. Entzerrersystem nach einem der Ansprüche 7 bis 9, dadurch gekennzeichnet, daß jedes der N zweiten Mittel (B21, B22, B23) mindestens ein Verzögerungsleitungsfilter (6) umfaßt.

## Claims

1. Transmission line corrector system comprising first means (21, C1, 1, 2) consisting of a first feedback-control loop intended for automatically correcting the attenuation of the continuous component of a signal propagating over a line and of second means intended for correcting the attenuation of the various frequency components of the signal, the said second means comprising a filter (5, 6) whose response curve is adjusted so as to frequency-correct the attenuation curve of the line, characterized in that the second means also comprise a second feedback-control loop (B) making it possible to alter the amplitude of at least one frequency component of the signal to a desired value.

2. Corrector system according to Claim 1, characterized in that the said second feedback-control loop (B) comprises a first means (22) making it possible to recover a fraction (F1) of the signal, a second means (D, C2) making it possible to detect the amplitude of the fraction (F1) of the signal, a third means (12) making it possible to compare the said detected amplitude with a reference value (R2) so as to create a frequency setting (v2), a fourth means (4) for altering the amplitude of the signal of the said frequency component under the action of the frequency setting (v2), and a fifth means (10) for reinserting the signal from the fourth means (4) into the line.

3. Corrector system according to Claim 2, characterized in that the first means (22) is a breaker, the second means (D, C2) is a diode (D) connected to a capacitor (C2), the third means (12) is a comparator, the fourth means (4) is a multiplier and the fifth means (10) is an adder making it possible to add together the signal from the multiplier and the signal carried on the line.

4. Corrector system according to any one of the preceding claims, characterized in that the filter (6) comprises at least one delay line (7).

5. Corrector system according to Claim 4, characterized in that the filter comprises at least one phase-shifter circuit (9).

6. Corrector system according to any one of the preceding claims, characterized in that the first feedback-control loop comprises a breaker (21) making it possible to recover a fraction (F1) of the signal, a capacitor making it possible to detect the amplitude of the fraction of the signal, a comparator (1) making it possible to compare the detected amplitude with a reference value (R1) so as to create a gain setting (v1) and a device (2) for altering the amplitude of the continuous component under the action of the gain setting (v1).

7. Corrector system for N transmission lines comprising means for correcting the dispersion in attenuation of the continuous components and of the frequency components of the various signals propagating over N lines, characterized in that the said means comprise first means (B1) making it possible to deliver, for the N lines, at least one same gain setting (v1) and at least one same frequency setting (v2) and N second means (B21, B22, B23) making it possible to modify the amplitude of the signals transmitted over the N lines under the action of the said settings.

8. Corrector system according to Claim 7, characterized in that the said first means (B1) comprise, on the one hand, a means (21) making it possible to recover a fraction (F1) of the continuous component of the signal propagating over one of the N lines, a means (C1) making it possible to detect the amplitude of this component and a means (1) making it possible to compare the amplitude thus detected with an amplitude reference (R1) so as to create the gain setting (V1) and, on the other hand, a means (22) making it possible to recover a fraction (F1) of at least one frequency component, a means (D, C2) making it possible to detect the amplitude of the said frequency component, and a means (12) making it possible to compare the detected amplitude with a reference value (R2) so as to create the frequency setting (v2).

9. Corrector system according to Claim 8, characterized in that each of the N second means (B21, B22, B23) comprises means (2) making it possible to alter the amplitude of the continuous component of the signal to a desired value under the action of the gain setting (v1) and means (4) making it possible to alter the amplitude of the frequency component under the action of the frequency setting (v2).

10. Corrector system according to any one of Claims 7 to 9, characterized in that each of the N second means (B21, B22, B23) comprises at least one filter (6) with delay line.
